# EUROPEAN PATENT SPECIFICATION

(11) **EP 0 475 556 B1**
(45) Date of publication and mention of the grant of the patent: **14.06.1995**
(21) Application number: 91301184.7
(22) Date of filing: 14.02.1991
(51) Int. Cl.: B29B 17/00, B29B 17/02

(54) **Plastics waste processing**
Verfahren zur Wiederverwendung von Kunststoffabfällen
Procédé pour le recyclage des déchets de matière plastique

(30) Priority: 10.09.1990 JP 239574/90
(43) Date of publication of application: 18.03.1992
(73) Proprietor: Matsuzaki, Tsutomu, Inasa-gun, Shizuoka-ken (JP); CHUO KAGAKU CO. LTD., Kohnosu-shi Saitama-ken (JP)
(72) Inventor: Matsuzaki, Tsutomu, Inasa-gun, Shizuoka-ken (JP)
(74) Representative: Waldren, Robin Michael

(56) References cited:
- EP-A- 0 165 585
- FR-A- 2 564 371
- FR-A- 2 649 353
- PATENT ABSTRACTS OF JAPAN vol. 5, no. 37 (M-58)(709) March 10, 1981 & JP-A-55 161 617 (AIKUNI TEZUKA ) December 16, 1980
- GEORGE S. BRADY 'MATERIALS HANDBOOK' 1963, MC GRAW - HILL, NEW YORK
- PATENT ABSTRACTS OF JAPAN vol. 12, no. 237 (C-509)(3084) July 6, 1988 & JP-A-63 28 483 (KURAUDO K.K. ) February 6, 1988

## Description

The present invention relates to a plastic waste processing method by which a waste plastic material, e.g. hard plastic waste of vinyl chloride, polyethylene, or foamed styrol, soft plastic waste, and other plastic waste containing metal scrap, is processed to a solid fuel product or a particular form disposable in a landfill.

It is well known in the art of disposal of bulk plastic waste including hard plastics, e.g. vinyl chloride, polyethylene, or foamed styrol, soft plastics, and metal trapped plastics that a waste plastic material, which is commonly a mixture of hard plastic waste, soft plastic waste, metal scrap, waste films, and so on, is substantially needed for size reduction by crushing, cutting, or grinding with the use of a corresponding device and also, separation of plastics from non-plastic fragments prior to the incineration or placement in a landfill.

However, such a known plastic waste processing method has a disadvantage that the preparatory separation of plastics is carried out by manual labor and will claim more cost increase.

Also, the use of the device for crushing, cutting, or grinding at the preparatory process requires a large amount of energy, e.g. electricity, thus increasing the overall cost and involves the generation of vibration, noise, and dust causing declination in the operating conditions.

Furthermore, the disposal of untreated plastic waste in a landfill is limited in location and may result in a secondary assault on the environment. Similarly, the incineration of plastic waste which generates a higher temperature needs the use of a hard-developed, high-cost heat-resistant incinerator and produces a variety of toxic gases of which removal is troublesome.

JP-A-55 161 617 discloses an arrangement in which waste thermoplastic is charged into a heated oil and moulded into a product. This does not satisfactorily solve the above described problems.

It is thus an object of the present invention to provide a plastic waste processing method in which while the preparatory procedure of crushing, cutting, or grinding a waste plastic material to be fed is no more needed, the waste plastic material is easily softened and melted down without generation of toxic gases, e.g. hydrogen chloride, and then processed to a solid fuel product which will generate no toxic gas when burnt.

It is another object of the present invention to provide a plastic waste processing method in which a waste plastic material containing metal scrap from e.g. disposable cameras is separated, while the generation of any toxic gas, e.g. of hydrogen chloride, is prevented, into metal fragments and melted plastics which are in turn processed to a solid fuel product which will generate no toxic gas when burnt.

It is a further object of the present invention to provide a plastic waste processing method in which a waste plastic material is melted down in a mineral oil or a spent oil to a saturation level and a resultant plastic saturated oil is converted into an appropriate form for safe disposal in a landfill.

The foregoing and other objects and novel features of the present invention will be more apparent from the following detailed description in conjunction with the accompanying drawings.

According to a first aspect of the invention there is provided a method of processing plastics waste, the method comprising melting the waste in a body of hot oil and forming the melted waste into a product; characterised in that the melted product floats on the oil and is removed from the body of oil prior to forming it into the product.

According to a second aspect of the invention there is provided a method of processing plastics waste comprising heating oil; feeding the plastics waste into the oil, thereby causing the plastics waste to melt, until the oil is nearly saturated with the plastics waste; and cooling and shaping the resultant mixture to form a product; characterised in that the oil is mineral oil and is heated to a temperature in the range of 110°C to 180° C.

Preferred features of the invention are set out in the dependent claims.

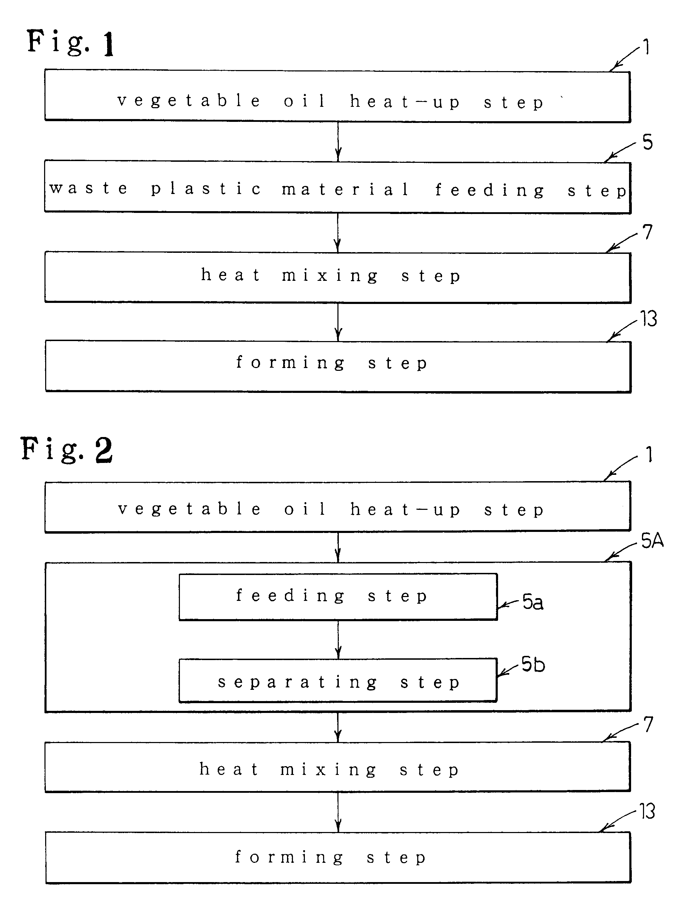

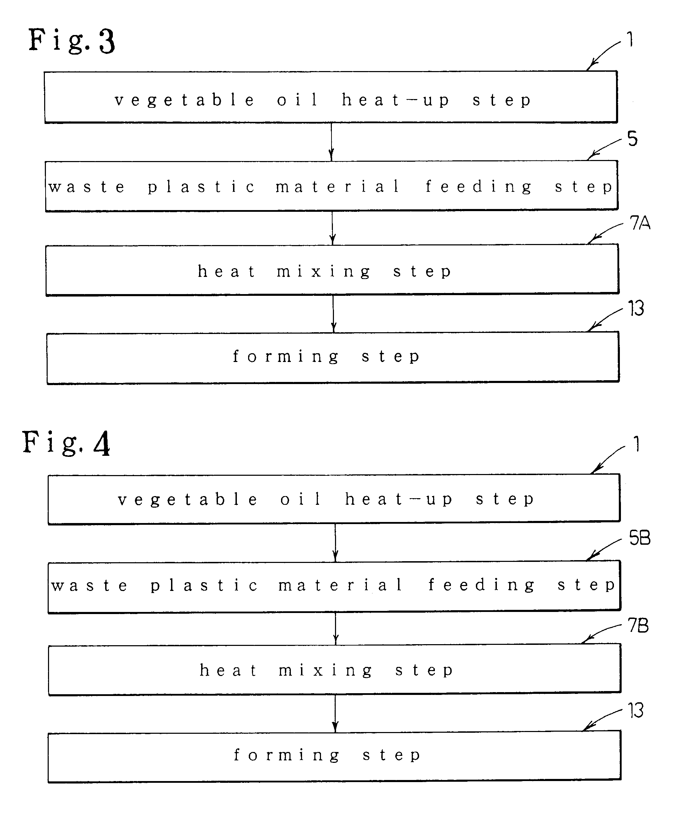

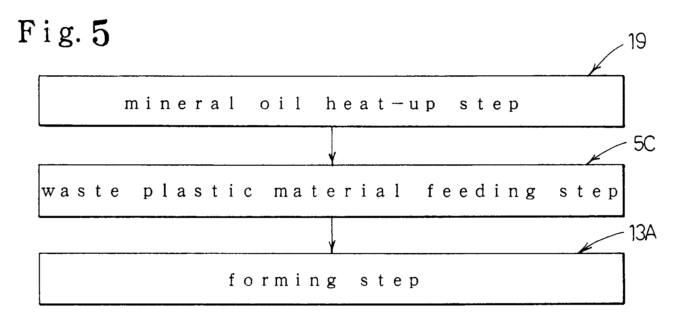

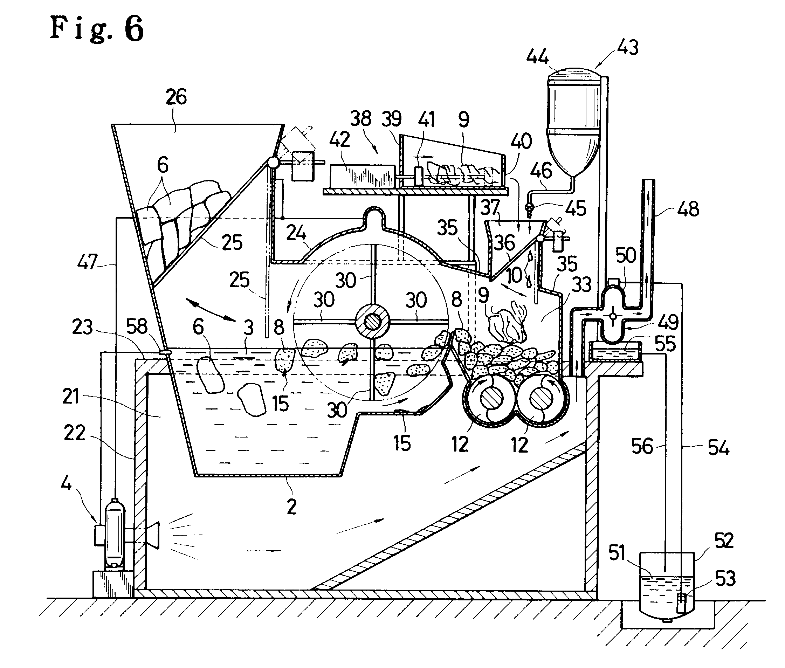

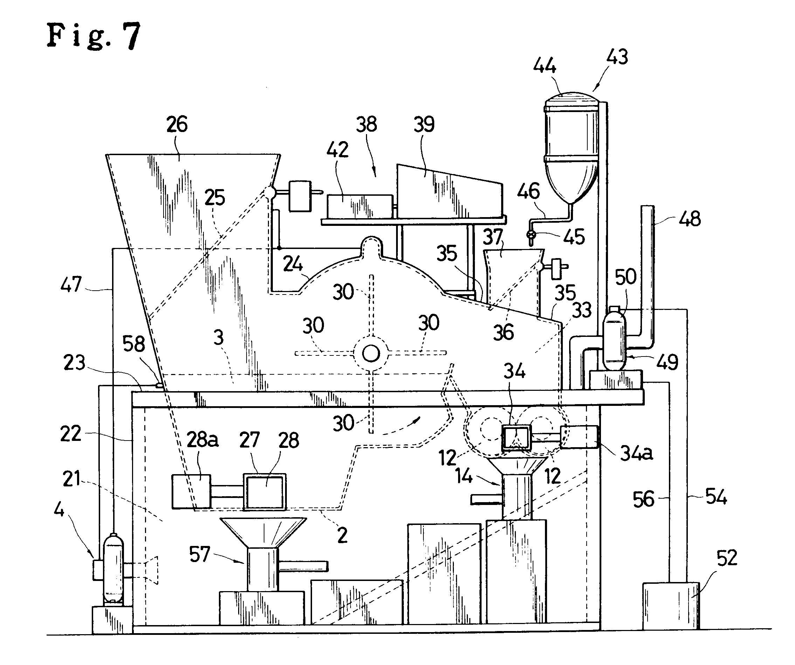

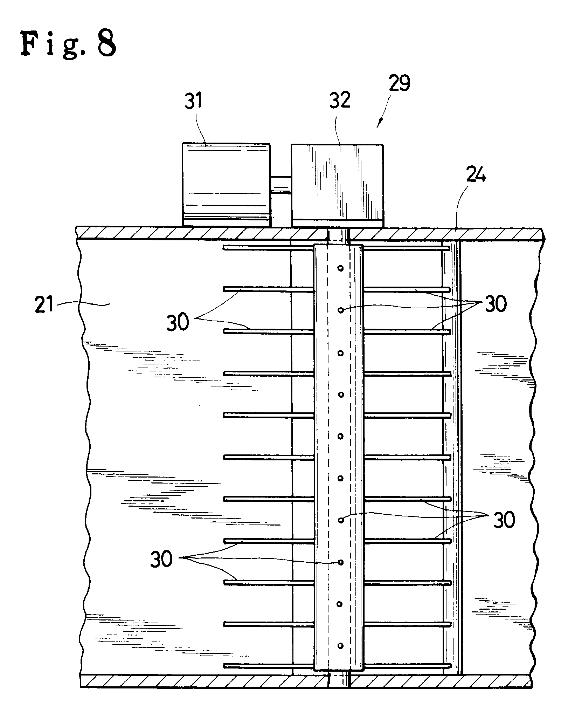

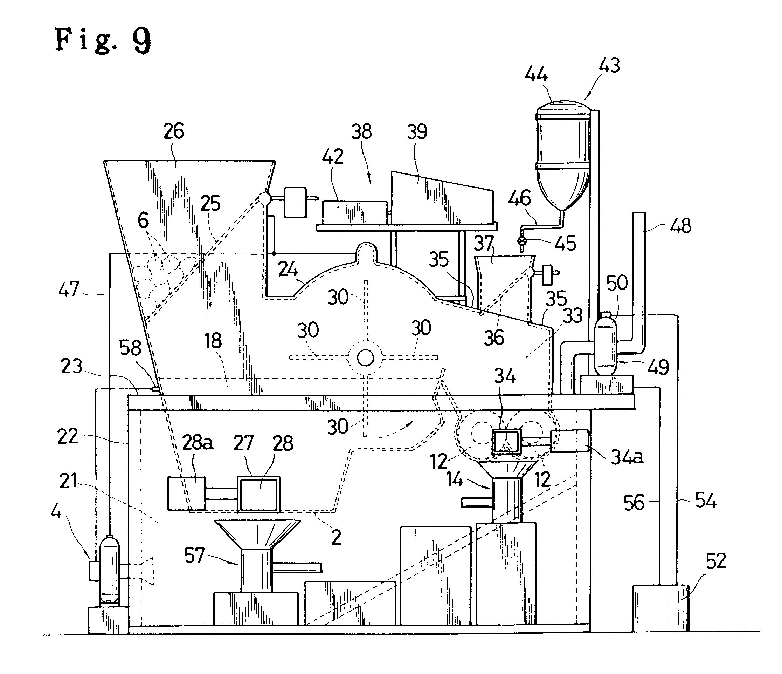

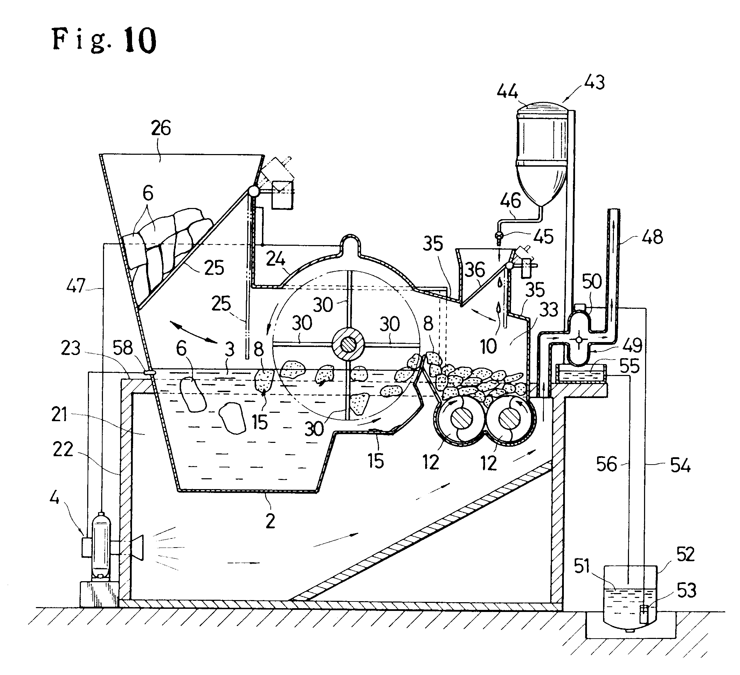

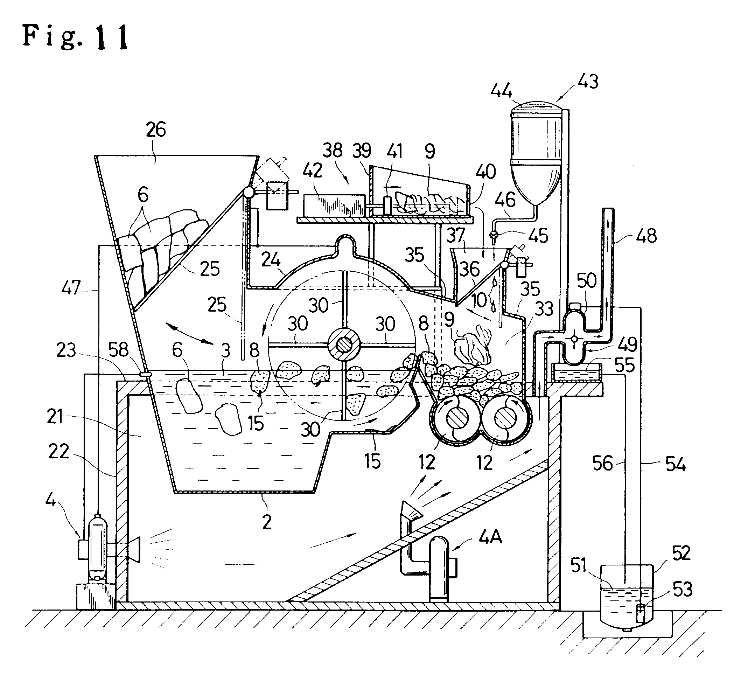

Fig. 1 is a flow chart showing one embodiment of the present invention; Fig. 2 is a flow chart showing a second embodiment of the present invention; Fig. 3 is a flow chart showing a third embodiment of the present invention; Fig. 4 is a flow chart showing a fourth embodiment of the present invention; Fig. 5 is a flow chart showing a fifth embodiment of the present invention; Fig. 6 is a cross sectional view showing a plastic waste processing apparatus arranged for implementation of the method of the present invention; Fig. 7 is a front view of the same of Fig. 6; Fig. 8 is an explanatory view showing an agitator in the plastic waste processing apparatus of Fig. 6; Fig. 9 is a view of the plastic waste processing apparatus of Fig. 6 explaining the use of a mineral oil; Fig.10 is a cross sectional view showing another plastic waste processing apparatus arranged for implementation of the method of the present invention; and Fig.11 is a cross sectional view showing a further plastic waste processing apparatus arranged for implementation of the method of the present invention.

The present invention will be described in detail, by way of example, referring to the accompanying drawings.

A method according to the present invention starts with a vegetable oil heat-up step 1, as illustrated in Fig.1, in which a vegetable oil contained in a top-opening pot or the like is heated by a heating device to such a temperature that no toxic gas is generated and simultaneously, a waste plastic material is readily softened and melted down, and more preferably, to 110°C to 180°C.

The vegetable oil used in the vegetable oil heat-up step 1 may be any of known types and preferably in view of cost saving and environmental protection, a spent oil which has been used in e.g. fry cooking.

The heating of the vegetable oil contained in the pot may be heated by a heater equipped with a controller for maintaining at a constant temperature.

Represented by the numeral 5 is a waste plastic material feeding step in which the waste plastic material is fed into the vegetable oil heated up to 110 to 180°C at the vegetable oil heat-up step 1.

The waste plastic material to be fed into the heated vegetable oil tends to melt down and float soon after having being immersed at the waste plastic material feeding step 5 and thus, may be supplied in the form of bulk solids which are not crushed nor cut into pieces after the recovery.

Also, the waste plastic material may be hard or soft plastics, e.g. in film form, including vinyl chloride, polyethylene, foamed styrol, etc.

Then, a heat mixing step 7 is provided for collecting the floating waste plastic material melted down at the waste plastic material feeding step 5, adding a given amount of a catalyst and a waste soft plastic material to the same, and mixing all together with a screw mixer or the like while being heated. This heat mixing step 7 is intended for efficiently generating and removing toxic gases, e.g. hydrogen chloride, which are commonly produced when a plastic material is burned and for reducing the amount of the vegetable oil trapped in the melted plastic material.

The catalyst employed in the heat mixing step 7 may be calcium hydroxide which is capable of neutralizing a toxic gas of hydrogen chloride, generated during heating of the melted waste plastic material, to calcium chloride which is then exhausted. The dosage of the calcium hydroxide catalyst is determined to an appropriate amount-for example, a few percent of the sum of the melted plastic material and the added soft plastic material.

The temperature for heating the melted waste plastic material at the heat mixing step 7 is controlled so as to stimulate the generation of a toxic gas of e.g. hydrogen chloride from the melted plastic material and increase the efficiency of mixing of the two plastic materials, and adjusted to a range between 220°C and 300°C.

The amount of the waste soft plastic material, which is added to the melted plastic material at the heat mixing step 7 for decreasing the amount of the trapped vegetable oil, is preferably 10 to 50 % of the melted plastic material.

Finally, a forming step 13 is provided in which a resultant plastic material mixture produced in the heat mixing step 7 is shaped by a forming device into a given configuration of solid fuel product. The forming device used in the forming step 13 may be a known former such as an extruder or a press machine.

The solid fuel product formed by the foregoing method contains the waste plastic material and the vegetable oil with the absence of toxic gas and thus, can be used as a high-calory fuel material.

Other methods according to the present invention will now be described referring to Figs.2 to 11, in which like steps are represented by like numerals as of the first method and no more explained.

A second method of the present invention shown in Fig.2 is distinguished from the first method by providing a waste plastic material feeding step 5A which is consisted of a feeding step 5a for feeding into a heated vegetable oil a waste plastic material containing metal scrap of components of e.g. disposable cameras and a separating step 5b for separating the scrap metal components from the melted waste plastic material through agitating the vegetable oil so that the scrap metal components accumulate on the bottom of a vegetable oil tub while the melted plastic material floats on the vegetable oil.

According to the second method having the waste plastic feeding step 5A, the waste plastic material mixed with metal scrap can be processed to a solid fuel product which contains no metallic fragment while the scrap metal components from disposable cameras are recovered, without crucial injury, for reuse thanking to the heating temperature which is as low as 110 to 180°C.

A third method of the present invention shown in Fig.3 is distinguished from the first method by providing a heat mixing step 7A in which the melted waste plastic material is mixed with a give amount of a catalyst while being heated. In this manner, the waste plastic material can equally be processed to a solid fuel product which contains a large amount of the vegetable oil.

A fourth method of the present invention shown in Fig.4 is distinguished from the first method by providing a waste plastic material feeding step 5B and a heat mixing step 7B. The waste plastic material feeding step 5B is arranged in which a selected waste plastic material which generates no hydrogen chloride gas during burning is fed into a heated vegetable oil. In the heat mixing step 7B, a given amount of waste soft plastic material which also generates no hydrogen chloride gas during burning is added to the waste plastic material melted down at the waste plastic material feeding step 5B.

Through the waste plastic material feeding step 5B and the heat mixing step 7B, the waste plastic material will be processed to a solid fuel product.

The heat mixing step 7B may be carried out without the addition of any waste soft plastic material.

A fifth method of the present invention shown in Fig.5 comprises, unlike the first method, a mineral oil heat-up step 19 for heating a mineral oil, e.g. a spent oil, contained in a tub such as a top-opening pot, to about 110 to 180°C using a heating device, a waste plastic material feeding step 5C for feeding a waste plastic material into the mineral oil heated at the mineral oil heat-up step 19 until the mineral oil is saturated, and a forming step 13A for processing the mineral oil, which is saturated with the melted waste plastic material fed at the waste plastic feeding step 5C, to an appropriate form for disposal in a landfill. Accordingly, the waste plastic material can be preserved for systematic placement in a landfill.

The mineral oil used at the mineral oil heat-up step 19 may be of any type and more preferably, a spent oil for cost saving. The latter is favored so that the simultaneous disposal of plastic waste and spent oil can be executed.

Figs.6 to 9 illustrate a plastic waste processing apparatus 60 for implementation of the first to fifth methods of the present invention. As shown throughout Figs.6 to 9, represented by the numeral 2 is a pot for filling with oil which is mounted to a top wall 23 of a casing 22 defining a combustion chamber 21. The upper of the pot 2 is covered with a cover member 24 for recovery of a generated gas and coupled to a hopper 26 which is provided for feeding a waste plastic material and has a shutter 25.

Also, a burner 4 using gas or oil fuel is provided as the heating device for heating the combustion chamber 21.

A drain passage 27 extends from the lower of the pot 2 across the combustion chamber 21 to the outside of the casing 22. An open/close valve 28 is mounted at the entrance of the drain passage 27 for opening and closing movement by the actuation of an electromagnetic solenoid 28a.

There is provided an agitator 29 which is equipped with agitating blades 30 and mounted to the cover member 24, also serving as a feeder. The agitator 29 serving as the feeder is provided for agitating a melted waste plastic material 8 in order to separate metal fragments and components from the plastic material. Also, the agitator 29 has a motor 31 for rotation of the agitating blades 30 at a lower speed because the waste plastic material 9 has been softened and melted down and a reducer 32 for reducing a driving force from the motor 31 and transmitting it to the agitating blades 30.

Denoted by 33 is a heating chamber for reception of the melted waste plastic material 8 transferred by the agitating blades 30 of the agitator 29 which acts as the feeder. The heating chamber 33 has at bottom a couple of mixing screws 12, 12 for discharging a resultant mixture, which has been produced in the chamber 33 and heated to 220 to 300° C with the burner 4, from a discharging passage 34 provided with an open/close valve 34a actuated by e.g. an electromagnetic solenoid to the outside of the casing 22.

The heating chamber 33 is defined at upper end by a heating chamber cover 35 so that a gas generated during heating can flow towards the cover member 24 of the pot 2. A hopper 37 with a shutter 36s is also mounted to the heating chamber cover 35 for feeding a waste soft plastic material 9 and a catalyst 10, e.g. calcium hydroxide, into the heating chamber 33.

There is also provided a waste soft plastic material feeder 38 for feeding the waste soft plastic material 9 into the hopper 37. The waste soft plastic material feeder 38 comprises a waste soft plastic material container 39, a feeder opening 40 provided in the hopper side wall of the container 39, a blade 41 mounted in the opposite side of the container 39 to the feeder opening 40 for pushing the waste soft plastic material 9 through the feeder opening 40 towards the hopper 37, and a hydraulic cylinder 42 for actuating the blade 41.

Represented by 43 is a catalyst feeder for feeding the catalyst 10 into the hopper 37. The catalyst feeder 43 comprises a tank 44 filled with the catalyst and a catalyst feeder piping 46 having an open/close valve 45 for doping the catalyst 10 from the tank 44 into the hopper 37.

A gas supply passage 47 is arranged for transferring a gas generated in the pot 2 and the heating chamber 33 into the burner 4.

Also, an exhaust passage 48 is arranged for discharging an exhaust gas from the combustion chamber 21 and the heating chamber 33 to the outside, having a wet-type exhaust gas scrubbing device 49 mounted in the intermediate thereof.

The wet-type exhaust gas scrubbing device 49 comprises a wet-type scrubber unit 50 mounted in the intermediate of the exhaust passage 48, a supply conduit 54 having a pump 53 for feeding a neutralizing agent, e.g. sodium hydroxide, from a neutralizing agent reservoir 52 into the wet-type scrubber unit 50, and an exhaust conduit 56 for carrying a spent liquid 55 from the wet-type scrubber unit 50 back to the neutralizing agent reservoir 52.

Furthermore, there is provided a former 57 for converting the mineral oil 18 saturated with the waste plastic material 6 and discharged from the drain passage 27 into a solid form which can then be disposed in a landfill.

In particular, a primary former 14 is provided for forming a mixture delivered from the discharging passage 34 by the mixing screws 12, 12 to a solid fuel product.

Denoted by 58 is a thermal sensor for controlling the burner 4 to maintain the oil in the pot at a desired temperature between 110°C and 180°C.

In the operation of the foregoing plastic waste processing apparatus 60, the vegetable oil 3 is first supplied into the pot 2 and heated by the burner 4 to a predetermined temperature of 110 to 180°C.

Then, the shutter 25 of the hopper 26 is opened for feeding the waste plastic material 6 into the heated vegetable oil 3.

The waste plastic material 6 immersed into the heated vegetable oil 3 is quickly softened and melted down to the melted plastic material 8 which in turn floats on the oil surface.

While floating on the oil surface, the melted plastic material 8 is agitated with the agitating blades 30 of the agitator 29 so that metal fragments and components move downward for separation from the plastics due to their greater specific gravity.

The melted plastic material 8 which is smaller in the specific gravity and remains on the oil surface is then transferred by the agitating blades 8 into the heating chamber 33.

When the melted plastic material 8 enters the heating chamber 33, a given amount of the waste soft plastic material which equals 10 to 50 % of the melted plastic material 8 is supplied from the hopper 37 of the waste soft plastic material feeder 48 with its shutter 36 turned open into the heating chamber 33 and simultaneously, an amount of the catalyst 10 which is equal to a few percent of the sum of the melted plastic material 8 and the waste soft plastic material 9 is doped across the hopper 37 to the heating chamber 33.

Then, the lower of the heating chamber 33 where the mixing screws 12, 12 are installed is heated by the burner 4 to 220 to 300°C and also, the melted plastic material 8, the waste soft plastic material 9, and the catalyst 10 all are mixed up together through the movement of the mixing screws 12, 12.

During the mixing action, a by-product gas of hydrogen chloride generated from both the melted and soft plastic materials 8 and 9 is converted by the neutralizing action of the catalyst 10 to calcium chloride for nontoxic exhaustion.

A resultant mixture carried by the mixing screws 12, 12 out from the discharging passage 34 and containing no hydrogen chloride gas is shaped by the former 14 to a desired configuration of solid fuel product.

Other gases generated in the pot 2 and the heating chamber 33 during the foregoing procedure are fed via the gas supply passage 47 to the burner 4 where their combustible components are burnt.

In the end, while the exhaust gas is discharged from the exhaust conduit 48 to the outside, its toxic gas components including hydrogen chloride are neutralized by the neutralizing agent of the wet-type exhaust gas scrubbing device 49 to nontoxic fumes, e.g. calcium chloride, which are then released to the atmosphere.

Similarly, a waste plastic material 6A, e.g. from disposable cameras, which contains a variety of metal fragments and components can also be processed to a solid fuel product while the metal fragments and components are recovered at the lowermost of the pot 2 for reuse.

If it is assured that a major waste plastic material 6B supplied to the pot 2 and a waste soft plastic material 9 added by the hopper 37 generate no by-product of the hydrogen chloride, the use of a catalyst may be omitted during the process.

In this case, the catalyst feeder 43 will be removed from the plastic waste material processing apparatus.

Also, if the waste plastic material 6 contains no metal waste, the agitator 29 may be eliminated from the arrangement of the apparatus.

In the operation with the pot 2 filled with a mineral oil 18 or a spent oil as shown in Fig.9, the waste plastic material 6 is first fed from the hopper 26 into the heated mineral oil 18 for melting down until the mineral oil 18 is saturated with the waste plastic material 6.

The mineral oil 18 saturated with the waste plastic material 6 is then transferred by opening the open/close valve 28 of the drain passage 27 to the former 57 where it is converted into a solid form which can be disposed in a landfill.

For processing the waste plastic material 6 with the mineral oil 18, another apparatus having no provision of the heating chamber 33, the waste soft plastic material feeder 38, the catalyst feeder 43, the mixing screws 12, 12, and the former 14 may be used.

The arrangement shown in Fig.10 is different, as denoted by 60A, from the plastic waste processing apparatus 60 portrayed in Figs.6 to 9, in which the heating chamber 33 is accompanied with only the catalyst feeder 43, less a soft plastic material feeder, and will be operated with equal success.

Also, the arrangement shown in Fig.11 is different, as denoted by 60B, from the apparatus illustrated in Figs.6 to 9, in which the pot 2 and the mixing screws 12, 12 are heated by their respective burners 4 and 4A, and will be operated with equal success.

Although the foregoing methods of the present invention are described with reference to the feeding of additional soft plastic waste into the heating chamber 33, the use of other low-calory material such as powder carbon or peat will be possible.

It would also be understood that the heating device in the apparatus is not limited to the burner and may be a heavy-oil heater, an electric heater, or the like.

As apparent from the foregoing description, the following advantages of the present invention are benefited. These do not constitute the claims of the application.
(1) A method according to the present invention comprises a vegetable oil heat-up step for heating a vegetable oil contained in a pot to 110° C to 180° C, a waste plastic material feeding step for feeding a waste plastic material into the vegetable oil heated to 110 to 180° C at the vegetable oil heat-up step, a heat mixing step in which the plastic material melted down at the waste plastic material feeding step and floating on the surface of the vegetable oil is recovered and mixed with a given amount of additional waste soft plastic material and a dose of catalyst, e.g. calcium hydroxide during heating at 220 to 300° C while a gas of hydrogen chloride generated from the melted waste plastic material is neutralized to e.g. calcium chloride for ease of removal, and a forming step for converting a resultant mixture produced at the heat mixing step into a solid fuel product so that the waste plastic material can readily be softened and melted down upon being immersed into the vegetable oil heated to 110 to 180° C without extra procedures for crushing, cutoff, and grinding.
   Accordingly, the preparatory step for crushing, cutting, or grinding the waste plastic material is eliminated whereby the processing cost will be reduced and the operating conditions will be enhanced.
(2 According to the foregoing method described in the paragraph (1), the waste plastic material is processed to a solid fuel product which will generate no toxic gas when being burnt.
   Hence, any plastic waste which in the prior art, is to be substantially processed by a known costly process can be converted to solid high-calory fuel products which are marketed for sale.
(3) According to the method of the paragraph (1), the vegetable oil used in fry cooking is also processed at low cost so that an assault on the environment resulting from careless disposal of the vegetable oil can be prevented. Particularly, an apparatus for implementation of the method can easily be fabricated to an appropriate size ranging from a large system for industrial use to a small scale installed at the front of a private store, e.g. a supermarket.
(4) According to the method of the paragraph (1), no specific, intricate technique is needed and the overall procedure will be facilitated.
(5) The methods defined in Claims 2 to 4 will provide the same advantages as of the paragraphs (1) to (4).
(6) The method of Claim 5 allows the mineral oil waste to be processed by saturation with a melted waste plastic material to a form disposable in a landfill.

Accordingly, both the spent oil and the plastic waste can simultaneously be processed to a mixture form for safe placement in a landfill and the disposal will be conducted with more efficiency.

Although the scope of the present invention is defined solely by the appended claims, the following numbered paragraphs are intended to provide a basis therefor and/or a basis for possible amendment of the claims if that proves necessary after the present application is filed:-
These numbered paragraphs are not to be construed as claims per se.
(1) A plastic waste processing apparatus comprising: a pot for filling with a vegetable oil; a heating device for heating the vegetable oil in the pot to 110 to 180° C; a feeding device for transferring a waste plastic material, which has been fed into the vegetable oil heated to 110 to 180° C in the pot, softened and melted down, and floated on the vegetable oil, to a heating chamber; mixing screws provided in the heating chamber; a soft plastic waste feeder for feeding a given amount of soft plastic waste into the heating chamber; a catalyst feeder for feeding a given dose of a catalyst, e.g. calcium hydroxide, into the heating chamber; if desired, a heating chamber heater provided, separately of the heating device, for heating the heating chamber to 220 to 300° C; and a former for shaping a mixture discharged between the mixing screws into a solid fuel product.
(2) A plastic waste processing apparatus comprising: a pot for filling with a vegetable oil; a heating device for heat the vegetable oil in the pot to 110 to 180° C; a separating device for agitating a waste plastic material, which has been fed into the vegetable oil heated to 110 to 180° C in the pot, softened and melted down, and floated on the vegetable oil, to separate metal members downwardly from the remaining melted plastic material; a feeder device for transferring the melted plastic material, less the metal members which have been removed by the separating device, to a heating chamber; mixing screws provided in the heating chamber; a soft plastic waste feeder for feeding a given amount of soft plastic waste into the heating chamber; a catalyst feeder for feeding a given dose of a catalyst, e.g. calcium hydroxide, into the heating chamber; if desired, a heating chamber heater provided, separately of the heating device, for heating the heating chamber to 220 to 300°C; and a former for shaping a mixture discharged between the mixing screws into a solid fuel product.
(3) A plastic waste processing apparatus comprising: a pot for filling with a vegetable oil; a heating device for heat the vegetable oil in the pot to 110 to 180°C; a feeding device for transferring a waste plastic material, which has been fed into the vegetable oil heated to 110 to 180°C in the pot, softened and melted down, and floated on the vegetable oil, to a heating chamber; mixing screws provided in the heating chamber; a catalyst feeder for feeding a given dose of a catalyst, e.g. calcium hydroxide, into the heating chamber; if desired, a heating chamber heater provided, separately of the heating device, for heating the heating chamber to 220 to 300°C; and a former for shaping a mixture discharged between the mixing screws into a solid fuel product.
(4) A plastic waste processing apparatus comprising: a pot for filling with a vegetable oil; a heating device for heat the vegetable oil in the pot to 110 to 180°C; a feeding device for transferring a waste plastic material, which has been fed into the vegetable oil heated to 110 to 180°C in the pot, softened and melted down, and floated on the vegetable oil, to a heating chamber; mixing screws provided in the heating chamber; a soft plastic waste feeder for feeding a given amount of soft plastic waste into the heating chamber; if desired, a heating chamber heater provided, separately of the heating device, for heating the heating chamber to 220 to 300°C; and a former for shaping a mixture discharged between the mixing screws into a solid fuel product.
(5) A plastic waste processing apparatus comprising: a pot for filling with a vegetable oil; a heating device for heating the vegetable oil in the pot to 110 to 180°C; and a former for converting a waste plastic material, which has been fed into the vegetable oil heated to 110 to 180°C in the pot, softened and melted down, and floated on the vegetable oil, into a solid fuel product.
(6) A plastic waste processing apparatus comprising: a pot for filling with a mineral oil; a heating device for heating the mineral oil in the pot to 110 to 180°C; and a former for cooling and shaping a mixture, which is formed by nearly saturating the mineral oil with a waste plastic material which has been fed into the mineral oil heated to 110 to 180°C in the pot and melted down, into a solid fuel product.

## Claims

1. A method of processing plastics waste (6), the method comprising melting the waste in a body of hot oil (3) and forming the melted waste (8) into a product; characterised in that the melted product (8) floats on the oil (3) and is removed from the body of oil (3) prior to forming it into the product.

2. A method according to Claim 1, wherein the removed material is admixed with waste soft plastics material (9).

3. A method according to either preceding claim, wherein the removed material or the removed material admixed with the waste soft material is treated with an agent (10) for neutralising toxic gases.

4. A method according to any preceding claim wherein the hot oil (3) with melted plastics material (8) is agitated for removing non-plastics scrap.

5. A method according to any preceding claim, wherein the oil (3) is heated to a temperature in the range of 110°C to 180°C, at which temperature the plastics waste (6) is added; and, after removal, the melted plastics waste (8) is heated to a temperature in the range of 220°C to 300°C before forming it into the product.

6. A method according to Claim 5, wherein the removed melted plastics waste (8) is treated with a catalyst (10).

7. A method according to Claim 6, wherein the catalyst (10) is calcium hydroxide.

8. A method according to any claim dependent on Claim 3, wherein the melted plastic waste (8) generates hydrogen chloride gas and the agent (10) is calcium chloride.

9. A method according to any preceding claim, wherein the plastics waste (6) contains metal waste and the method comprises the further step of separating the metal waste from the plastic waste by allowing the metal waste to fall to the bottom of a container (2) containing the body of heated oil (3).

10. A method according to any preceding claim, wherein the oil (3) is vegetable oil.

11. A method of processing plastics waste (6) comprising heating oil (18); feeding the plastics waste (6) into the oil (18), thereby causing the plastics waste (6) to melt, until the oil (18) is nearly saturated with the plastics waste (6); and cooling and shaping the resultant mixture to form a product;
characterised in that the oil (18) is mineral oil and is heated to a temperature in the range of 110°C to 180°C.

## Patentansprüche

1. Verfahren zum Verarbeiten von Kunststoffabfall (6), wonach der Abfall in einem Bad aus heißem Öl (3) geschmolzen wird und der geschmolzene Abfall (8) zu einem Produkt geformt wird, dadurch gekennzeichnet, daß das geschmolzene Produkt (8) auf dem Öl (3) schwimmt und aus dem Ölbad (3) vor der Formung zu einem Produkt entfernt wird.

2. Verfahren nach Anspruch 1, wonach dem entfernten Material ein Abfall aus weichen Kunststoffmaterial (9) beigemischt wird.

3. Verfahren nach einem der vorhergehenden Ansprüche, bei dem das entfernte Material oder das entfernte Material, welchem weiches Abfallmaterial beigemischt wurde, mit einem Agens (10)zum Neutralisieren giftiger Gase behandelt wird.

4. Verfahren nach irgendeinem der vorhergehenden Ansprüche, wonach das heiße Öl (3) mit dem geschmolzenen Kunststoffmaterial (8) umgerührt wird, um nicht aus Kunststoff bestehenden Schrott zu entfernen.

5. Verfahren nach irgendeinem der vorhergehenden Ansprüche, wonach das Öl (3) auf eine Temperatur in dem Bereich von 110°C bis 180°C erhitzt wird, bei welcher Temperatur der Kunststoffabfall (6) hinzugefügt wird, und nach dem Entfernen der geschmolzene Kunststoffabfall (8) auf eine Temperatur in dem Bereich von 220°C bis 300°C vor der Formung desselben zu einem Produkt erhitzt wird.

6. Verfahren nach Anspruch 5, wonach der entfernte geschmolzene Kunststoffabfall (8) mit einem Katalysator (10) behandelt wird.

7. Verfahren nach Anspruch 6, bei dem der Katalysator (10) Calciumhydroxid ist.

8. Verfahren nach irgendeinem der auf Anspruch 3 rückbezogenen Ansprüche, wonach der geschmolzene Kunststoffabfall (8) Chlorwasserstoffgas erzeugt und das Agens (10) Calciumchlorid ist.

9. Verfahren nach irgendeinem der vorhergehenden Ansprüche, bei dem der Kunststoffabfall (6) Metallabfall enthält und das Verfahren den weiteren Schritt der Trennung des Metallabfalls von dem Kunststoffabfall umfaßt, indem dem Metallabfall die Möglichkeit gegeben wird auf den Boden eines Behälters (2) zu fallen,welcher das Bad aus erhitztem Öl (3) enthält.

10. Verfahren nach irgendeinem der vorhergehenden Ansprüche, bei dem das Öl (3) Pflanzenöl ist.

11. Verfahren zum Verarbeiten von Kunststoffabfall (6), wonach Öl (18) erhitzt wird, der Kunststoffabfall (6) in das Öl (18) eingeführt wird, wodurch der Kunststoffabfall (6) zum Schmelzen gebracht wird bis das Öl (18) nahezu mit dem Kunststoffabfall (6) gesättigt ist, und wonach die resultierende Mischung abgekühlt und geformt wird, um ein Produkt herzustellen, dadurch gekennzeichnet, daß das Öl (18) Mineralöl ist und auf eine Temperatur im Bereich von 110°C bis 180°C erhitzt wird.

## Revendications

1. Procédé de traitement de déchets de matières plastiques (6), le procédé consistant à faire fondre les déchets dans une masse d'huile chaude (3) et à mettre sous la forme d'un produit les déchets fondus (8); caractérisé en ce que le produit fondu (8) flotte à la surface de l'huile (3) et est enlevé de la masse d'huile (3) avant d'être mis sous la forme du produit.

2. Procédé selon la revendication 1, dans lequel la matière enlevée est mélangée avec une matière plastique molle de rebut (9).

3. Procédé selon l'une quelconque des revendications précédentes, dans lequel la matière enlevée ou la matière enlevée mélangée avec la matière molle de rebut est traitée avec un agent (10) destiné à neutraliser les gaz toxiques.

4. Procédé selon l'une quelconque des revendications précédentes, dans lequel l'huile chaude (3), en association avec la matière plastique fondue (8), est agitée pour enlever les débris constitués de matière non-plastique.

5. Procédé selon l'une quelconque des revendications précédentes, dans lequel l'huile (3) est chauffée à une température située dans la plaque comprise entre 110°C et 180°C, température au niveau de laquelle les déchets de matières plastiques (6) sont ajoutés; et, après l'enlèvement, les déchets de matières plastiques fondus (8) sont chauffés à une température située dans la plage comprise entre 220°C et 300°C avant d'être mis sous la forme du produit.

6. Procédé selon la revendication 5, dans lequel les déchets de matières plastiques fondues (8) enlevés sont traités à l'aide d'un catalyseur (10).

7. Procédé selon la revendication 6, dans lequel le catalyseur (10) est de l'hydroxyde de calcium.

8. Procédé selon l'une quelconque des revendications dépendant de la revendication 3, dans lequel les déchets de matières plastiques (8) fondus engendrent des gaz de chlorure d'hydrogène et l'agent (10) est du chlorure de calcium.

9. Procédé selon l'une quelconque des revendications précédentes, dans lequel les déchets de matières plastiques (6) contiennent des débris métalliques et le procédé comporte en outre l'étape consistant à séparer les débris métalliques des déchets de matières plastiques en permettant aux débris métalliques de tomber au fond d'un conteneur (2) contenant la masse d'huile chauffée (3).

10. Procédé selon l'une quelconque des revendications précédentes, dans lequel l'huile (3) est une huile végétale.

11. Procédé de traitement de déchets de matières plastiques (6) consistant à chauffer de l'huile (18); alimenter les déchets de matières plastiques (6) dans l'huile (18), en amenant ainsi les déchets de matières plastiques (6) à fondre, jusqu'à ce que l'huile (18) soit pratiquement complètement saturée avec les déchets de matières plastiques (6); et refroidir et mettre sous la forme d'un produit le mélange résultant;
caractérisé en ce que l'huile (18) est une huile minérale et est chauffée à une température située dans la plage comprise entre 110°C et 180°C.
